# EUROPEAN PATENT SPECIFICATION

(11) **EP 2 339 928 B1**
(45) Date of publication and mention of the grant of the patent: **22.05.2019**
(21) Application number: 09744535.7
(22) Date of filing: 20.10.2009
(51) Int. Cl.: C12G 3/00, A23L 5/00, A23L 7/10, A23L 7/117, A23L 7/161, A23L 7/17, A23L 33/21, A23L 7/00

(54) **EXPANSION OF EXTRUDED CEREALS WITH GOOD SOURCE OF FIBER**
EXPANSION VON EXTRUDIERTEN CEREALIEN MIT GUTER BALLASTSTOFFQUELLE
EXPANSION DE CÉRÉALES EXTRUDÉES AVEC UNE BONNE SOURCE DE FIBRES

(30) Priority: 31.10.2008 US 262855
(43) Date of publication of application: 06.07.2011
(73) Proprietor: The Quaker Oats Company, Chicago, IL 60661 (US)
(72) Inventor: CHATEL, Robert E., Hoffman Estates IL 60192 (US); MUI, Sandy, Cary IL 60023 (US); FRENCH, Justin A., Fox River Grove Illinois 60021 (US)
(74) Representative: Jenkins, Peter David
(86) International application number: PCT/US2009/061240
(87) International publication number: WO 2010/051181

(56) References cited:
- EP-A1- 0 512 249
- EP-A1- 0 626 138
- EP-A1- 1 955 600
- WO-A1-00/28836
- WO-A1-96/03892
- WO-A1-99/22607
- WO-A2-2007/081655
- WO-A2-2008/024926
- GB-A- 856 705
- US-A- 4 350 714
- US-A- 4 620 981
- US-A1- 2002 054 944
- US-A1- 2003 008 049
- US-A1- 2007 092 620
- US-B1- 6 491 959
- SAJILATA M G ET AL: "Specialty starches for snack foods" CARBOHYDRATE POLYMERS, APPLIED SCIENCE PUBLISHERS, LTD. BARKING, GB, vol. 59, no. 2, 10 January 2005 (2005-01-10), pages 131-151, XP004696182 ISSN: 0144-8617
- Souci, Fachmann, Kraut: "Food Compositions and Nutrition Tables", 31 December 2000 (2000-12-31), Medpharm, Stuttgart ISBN: 3-88763-076-9 vol. 6 * pages 543, 579 *

## Description

### FIELD OF THE INVENTION

The present invention relates generally to high fiber extruded cereals. In particular, the invention relates to expansion of a high fiber cereal product.

### BACKGROUND OF THE INVENTION

There is a demand for foods that contain a high level of total dietary fiber, e.g., for colon health, reducing cholesterol, improving blood sugar control, and lowering risk of heart disease. It would be convenient to have a ready to eat expanded breakfast cereal that includes a good source of dietary fiber.

For many years cereal products have been produced from grains in expanded form. Expanded cereals have a unique crispness and texture and can be produced by many methods, including extrusion. However, extruded whole grain cereals with significant amounts of dietary fiber are difficult to expand without overcooking. Typically, the incorporation of high levels of fiber into extruded cereal products depresses product expansion.

Methods are needed to produce an expanded cereal product with a good source of dietary fiber.

WO-A-2007/081655 discloses an extrudable food composition. WO-A-2008/024926 discloses production of multi-grain, whole-grain, soft and crunchy sheeted snacks. WO-A-96/03892 discloses foods containing thermally-inhibited starches and flours. GB 856,705 discloses improvements in or relating to the production of ready-to-eat, puffed cereal products. EP-A-0512249 discloses extruded foods containing high amylose starch. US-A-2002/0054944 discloses a snack product. US-B-6,491,959 discloses production of crispy corn-based snacks having surface bubbles.

### SUMMARY OF THE INVENTION

In one aspect, a total cereal composition according to claim 1 is provided. The cereal composition comprises waxy starch in an amount from 7 to 10% by weight of the total cereal composition and a cereal mixture comprising a fiber content, wherein the fiber content is in an amount from 6 to 10% by weight of the total cereal composition, whole grain cereal present in an amount from 60% to 90% by weight of the total cereal composition, and water sufficient to form the expanded product.

Another aspect relates to a method according to claim 4 of producing an expanded cereal product. The method comprises combining a waxy starch in an amount from 5 to 15% by weight of the total cereal composition and a cereal mixture comprising a fiber content, wherein the fiber content is in an amount from 1 to 15% by weight of the total cereal composition, and whole grain cereal present in an amount of from 60 % to 90% by weight of the total cereal composition, to form a total cereal composition. The total cereal composition is mixed with water in the form selected from the group consisting of liquid water, steam and blends thereof to form a wet, free-flowing mixture. The wet, free-flowing mixture is extruded at a temperature between 149 and 177°C (300 and 350°F) to form an expanded cereal.

Preferred features are defined in the dependent claims.

### DETAILED DESCRIPTION OF THE INVENTION

The present invention is directed to achieving expansion in extruded cereals having a good source of fiber. The inventors have discovered that expansion of a high fiber cereal product can be achieved by adding waxy starch in a quantity from 5 to 15% by weight of the total cereal composition to a cereal mixture comprising a fiber source in a quantity from 1 to 15% by weight of the total cereal composition to create a total cereal composition. In one embodiment, waxy starch may be added in an amount from 7 to 10% by weight of the total cereal composition to a cereal mixture comprising a fiber source in a quantity from 6 to 10% by weight of the total cereal composition. The total cereal composition is mixed with water to form a cereal dough which is extruded to form an expanded cereal. The expanded cereal product has a bland base flavor and is a good source of fiber.

According to one embodiment of the present invention, a total cereal composition is provided. A cereal mixture comprises cereal flour, sugar, and a fiber source. The cereal mixture is combined with a waxy starch to form a total cereal composition.

The terms "by weight of the total cereal composition" or "weight % of the total cereal composition" as used herein means the combined weight of all the dry ingredients exclusive of water and prior to entering an extruder. A cereal dough forms after water is added to the total cereal composition or after water and heat are added to the total cereal composition. Heat is commonly added through the extrusion process.

Any suitable fiber source can be used in a cereal mixture of the present invention. For example, corn or oat fiber may be the source of fiber within a cereal mixture. Additionally, any bran source may be used such as bran from cereal grains (e.g., wheat bran, oat bran, corn bran). Whole grain corn or oat flours may also be used. The fiber source may be selected from the group consisting of corn fiber, oat fiber, wheat bran, oat bran, corn bran, whole corn flour, whole oat flour, and blends thereof. In one embodiment, the fiber source is selected from the group consisting of whole oat flour, oat fiber, corn fiber, and blends thereof.

In the method of producing a high-fiber expanded cereal product of the present invention, the fiber content is in the range from 1 to 15% by weight of the total dry cereal. In the total cereal composition of the present invention, the fiber content in the cereal mixture is in the range from 6 to 10% by weight of the total dry cereal composition.

The skilled practitioner recognizes that extrusion dies have orifices through which the material is extruded. Thus, extrudate that contains insoluble particulate that will not fit through the orifice will clog the orifices, reducing product quality and production. Thus, the skilled practitioner can take appropriate action to ensure that the insoluble particles are of a size smaller than the smallest orifice.

Non-limiting examples of whole grain cereal flours include whole wheat, whole rice, whole corn (maize), whole millet, whole sorghum (milo), whole rye, whole triticale, whole oats, whole barley, whole teff, whole wild rice, whole spelt, whole buckwheat, whole amaranth, whole quinoa, whole kaniwa, whole cockscomb, other whole grain cereal flours known in the art, and combinations thereof. Typically, the whole grain cereal flour is present in an amount from 60% to 90% by weight of the total cereal composition. In one embodiment the grain cereal flour is present in an amount from about 75% to about 85% by weight of the total cereal composition. With the guidance provided herein, the skilled practitioner will be able to prepare the total cereal composition.

The waxy starch can be any suitable waxy starch. A waxy starch is a starch that contains 10% or less of its starch content as amylose. Non-limiting examples of cereal grain sources for waxy starches include rice, corn (maize), sorghum (milo), barley, as well as other varieties of grain or starchy seeds. The waxy starch is selected from the group consisting of corn, rice, barley, and blends thereof. To achieve product expansion during extrusion, the waxy starch is present in the total cereal composition in an amount from 7% to 10% by weight. In one embodiment, waxy corn starch is the waxy starch source.

Other ingredients typically found in a cereal product may also be added to the cereal mixture. With the guidance provided herein, the skilled practitioner will be able to add a variety of ingredients to the cereal mixture. For example, any suitable sugar such as sucrose, fructose, dextrose or others can be incorporated into the cereal mixture. Typically, the sugar is present in an amount less than about 15% by weight, and more typically less than about 10% of the total cereal composition.

Various minor components, such as flavors, colors, salts, and preservatives can be added. For example, any salt commonly used in the art, such as sodium chloride, can be added. Calcium carbonate can also be added for calcium fortification and flavor development. Preservatives such as BHA, BHT, and the like, also are suitably added. In particular, such preservatives often are applied with a carrier. A premix comprising BHT in a maltodextrin carrier is suitably used. A vitamin/mineral supplement also can be added to the cereal mixture to boost the nutritional content of the cereal. Alternatively, a vitamin solution can be sprayed on the surface of the cereal. Furthermore, the resulting cereal pieces exiting the extruder may further comprise a coating such as a sugar coating or other coatings known in the art.

According to another aspect of the present invention, a method of producing an expanded high fiber cereal product is provided. The method comprises combining a waxy starch at a concentration of 5 to 15% by weight of the total cereal composition with a cereal mixture comprising cereal flours, a fiber source, and other ingredients to form a total cereal composition.

The total cereal composition is mixed with water to form a wet, free-flowing mixture. The wet, free-flowing mixture then is extruded through a die under conditions sufficient to form a cooked dough. Water may be added to the total cereal composition at a concentration of approximately 16 to 22% by weight of the combined dry and wet ingredients. Water may be in the form selected from the group consisting of liquid water, steam, and blends thereof.

The skilled practitioner recognizes that the combination of dry ingredients with a suitable amount of water yields a wet, free-flowing mixture. This mixture is uncooked, or raw. A dough is formed when the starches present in the mixture are fully gelatinized. Thus, a cooked dough is formed from the wet, free-flowing mixture by addition of heat. In an embodiment of the invention, heat is added by extrusion. For extrusion purposes, a starch is gelatinized when the starch granules are disrupted, releasing the amylose and amylopectin starch molecules. Gelatinized starch transforms the wet, free-flowing mixture of solids and water into a dough. This dough has viscoelastic properties that enable the dough to expand as it exits an extruder die, provided the temperature is above the boiling point of water.

Extrusion typically is carried out in an extruder having a barrel having plural barrel sections. The barrel sections may have ratio of length L to diameter D between about 1 and about 10, more typically about 4. Further, the number of barrel sections typically is 1 to about 8, more typically about 5 barrel sections per extruder barrel. Often, these sections can be independently heated or cooled, in accordance with the requirements of the use. With the guidance provided herein, the skilled practitioner will be able to establish the appropriate amount of water and heat to add to (or subtract from) the total cereal composition to form a cooked cereal dough.

The addition of waxy corn starch to a high-fiber cereal mixture results in a lighter, crispier texture, and a longer bowl-life, when expanded by extrusion, as compared to a high-fiber expanded cereal without waxy corn starch. When a high-fiber product not including waxy starch is expanded by extrusion, a significant amount of work is required to expand the extruded product. This additional work increases the water soluble starch in the solid product and consequently reduces bowl life. Thus, an embodiment of the invention using extrusion to heat and expand the product yields a high-fiber expanded product of the invention having better texture and longer bowl life.

Although the inventor prefers not to be limited by theory, it is believed that less stress is desirable during extrusion because it minimizes the starch damage and the associated water solubility. Thus, the high-fiber product of this embodiment of the invention has a longer bowl life than a high- fiber product not containing waxy starch.

In one embodiment of the present invention, the cereal dough is cooked during extrusion in a suitable extruder, as is well known in the art for making expanded puffed cereals. Typically, such extruding is done at low moisture and high shear. The total moisture content of the cereal dough in the extruder is typically in the range between 16% and 22% by total weight of the cereal dough. This concentration can be achieved by adding water before extrusion to the dry, free-flowing mixture and mixing with a suitable mixer. Low levels of steam can also be added to the wet, free-flowing mixture. This allows even hydration of the flours, starches, and fiber and preheats the wet mixture prior to extrusion.

To achieve the desired degree of expansion, the cereal extruder can be operated to attain a dough temperature between about 149°C (300°F) and about 177°C (350 °F). As the cereal exits the extruder, the cereal product expands rapidly to produce an expanded cereal with the cereal length being cut or otherwise divided into pieces as is well known in the art. In one embodiment of the present invention, the dough can be formed and cooked during extrusion in a suitable extruder. As the cereal exits the extruder, the cereal pieces expand rapidly to produce expanded cereal. With the guidance provided herein, the skilled practitioner will be able to establish appropriate extrusion conditions.

### EXAMPLE 1

An extruded high fiber cereal product is prepared using ingredients in the ranges of relative proportions set forth in Table 1.

| **Base Dry Mix** | **Approx. wt%** |
|---|---|
| Whole White Corn Flour | 75-85 |
| Waxy Starch | 7-11 |
| Oat Flour | 5-9 |
| Sugar and Other Ingredients | 3-9 |
| TOTAL | 100 |

These ingredients are mixed with water in a quantity of between about 6-15 weight percent of the dry ingredients. A low level of steam is added to the wet, free-flowing mixture. The wet, free-flowing mixture is extruded at conditions that will raise the temperature to between about 149°C (300°F) and about 177°C (350°F) to form an expanded cereal product. The product has a small cell structure, low bulk density, good texture, and a bland base flavor. The product, which also has better bowl life than an otherwise identical product devoid of waxy starch prepared in the same way, has about 3g of fiber per serving.

### EXAMPLE 2

An extruded high fiber cereal product was prepared using ingredients in the relative proportions shown in Table 2.

**Table 2**

| **Base Dry Mix** | **Approx. wt%** |
|---|---|
| Whole White Corn Flour | 78 |
| Waxy Corn Starch | 9 |
| Oat Flour | 7 |
| Sugar and Other Ingredients | 6 |
| TOTAL | 100 |

The expanded high fiber cereal was prepared by mixing the ingredients shown in Table 1 with water. Water was added in quantity sufficient to equal about 10 wt percent of the weight of the dry ingredients. Low levels of steam also were added to the cereal mixture to evenly hydrate the flours, starches, and fiber and to preheat the wet mixture prior to extrusion. The cereal dough was subsequently cooked and extruded in a cereal extruder to form expanded cereal product. Most of the heat came from the friction generated by the extrusion process. To achieve the desired degree of expansion, the cereal extruder was operated to attain a dough temperature between about 160°C (320°F) and about 166°C (330°F). The cereal dough created a product having a bland base flavor and approximately 3 g of fiber per serving. The product also had a small cell structure, low bulk density, and a good texture.

## Claims

1. A total cereal composition for extrusion processing to form an expanded high fiber cereal product, said composition comprising:
waxy starch in an amount from 7 to 10% by weight of the total composition and a cereal mixture comprising a fiber content in an amount from 6 to 10% by weight of the total composition,
whole grain cereal present in an amount from 60% to 90% by weight of the total cereal composition, and
water sufficient to form the expanded product,
wherein the total cereal composition is mixed with water in the form selected from the group consisting of liquid water, steam, and blends thereof, to form a wet, free-flowing mixture that becomes a cooked cereal dough that expands upon extrusion,
and wherein the amount of water is between 16% and 22% by weight of the wet, free-flowing mixture.

2. The composition of claim 1, wherein the fiber content is selected from the group consisting of corn fiber, oat fiber, wheat bran, oat bran, corn bran, corn flour, oat flour, whole oat flour, and blends thereof,
preferably wherein the fiber content is selected from the group consisting of whole oat flour, oat fiber, corn fiber, and blends thereof.

3. The composition of claim 1, wherein the waxy starch is selected from the group consisting of waxy corn starch, waxy rice starch, waxy barley starch, and blends thereof;
preferably wherein the waxy starch is waxy corn starch.

4. A method of producing a high-fiber expanded cereal product comprising:
combining a waxy starch in an amount from 5 to 15% by weight of the total cereal composition and a cereal mixture comprising a fiber content, in an amount from 1 to 15% by weight of the total cereal and whole grain cereal present in an amount from 60% to 90% by weight of the total cereal composition, to form a total cereal composition;
mixing the total cereal composition with water in the form selected from the group consisting of liquid water, steam, and blends thereof to form a wet, free-flowing mixture; and
extruding the wet, free-flowing mixture at a temperature between 149 and 177°C (300 and 350°F) to form the expanded cereal product.

5. The method of claim 4, wherein the fiber content is selected form the group consisting of corn fiber, oat fiber, wheat bran, oat bran, corn bran, corn flour, oat flour, and blends thereof,
preferably wherein the fiber content is selected from the group consisting of oat flour, oat fiber, corn fiber, and blends thereof.

6. The method of claim 4, wherein the waxy starch is selected form the group consisting of waxy corn starch, waxy rice starch, waxy barley starch, and blends thereof;
preferably wherein the waxy starch is waxy corn starch.

7. The method of claim 4, wherein:
the waxy starch is in an amount from 7 to 10% by weight of the total cereal composition, and the fiber content is in an amount from 6 to 10% by weight of the total cereal composition.

8. The method of claim 7, wherein the fiber content is selected from the group consisting of corn fiber, oat fiber, wheat bran, oat bran, corn bran, corn flour, oat flour and blends thereof.

9. The method of claim 7, wherein the waxy starch is selected from the group consisting of waxy corn starch, waxy rice starch, waxy barley starch, and blends thereof; preferably wherein the waxy starch is waxy corn starch.

10. An expanded high fiber cereal product comprising a total cereal composition according to claim 1,
wherein the total cereal composition is subjected to extrusion conditions sufficient to form the expanded product.

11. The composition of claim 1 or product of claim 10 wherein the water is at a concentration of 16 to 22% by weight of the combined dry and wet ingredients.

## Patentansprüche

1. Vollgetreidezusammensetzung zur Extrusionsverarbeitung, um ein expandiertes faserreiches Getreideprodukt zu bilden, wobei die genannte Zusammensetzung Folgendes umfasst:
Wachsstärke in einer Menge von 7 bis 10 Gew.-% bezogen auf die gesamte Zusammensetzung und ein Getreidegemisch mit einem Fasergehalt in einer Menge von 6 bis 10 Gew.-% bezogen auf die gesamte Zusammensetzung,
Vollkorngetreide in einer Menge von 60 bis 90 Gew.-% bezogen auf die Vollgetreidezusammensetzung und
ausreichend Wasser, um das expandierte Produkt zu bilden,
wobei die Vollgetreidezusammensetzung mit Wasser in einer Form gemischt wird, die ausgewählt ist aus der Gruppe bestehend aus flüssigem Wasser, Dampf und Mischungen davon, um ein nasses, frei fließendes Gemisch zu bilden, das zu einem gekochten Getreideteig wird, der beim Extrudieren expandiert,
und wobei die Wassermenge zwischen 16 und 22 Gew.-% bezogen auf das nasse, frei fließende Gemisch liegt.

2. Zusammensetzung nach Anspruch 1, wobei der Fasergehalt ausgewählt ist aus der Gruppe bestehend aus Maisfaser, Haferfaser, Weizenkleie, Haferkleie, Maiskleie, Maismehl, Hafermehl, Vollkornhafermehl und Mischungen davon,
wobei der Fasergehalt vorzugsweise ausgewählt ist aus der Gruppe bestehend aus Vollkornhafermehl, Haferfaser, Maisfaser und Mischungen davon.

3. Zusammensetzung nach Anspruch 1, wobei die Wachsstärke ausgewählt ist aus der Gruppe bestehend aus Wachsmaisstärke, Wachsreisstärke, Wachsgerstenstärke und Mischungen davon;
wobei die Wachsstärke vorzugsweise Wachsmaisstärke ist.

4. Verfahren zum Produzieren eines faserreichen expandierten Getreideprodukts, das Folgendes beinhaltet:
Kombinieren einer Wachsstärke in einer Menge von 5 bis 15 Gew.-% bezogen auf die Vollgetreidezusammensetzung und eines Getreidegemischs mit einem Fasergehalt in einer Menge von 1 bis 15 Gew.-% bezogen auf das Vollgetreide und Vollkorngetreide in einer Menge von 60 bis 90 Gew.-% bezogen auf die Vollgetreidezusammensetzung, um eine Vollgetreidezusammensetzung zu bilden;
Mischen der Vollgetreidezusammensetzung mit Wasser in einer Form, die ausgewählt wird aus der Gruppe bestehend aus flüssigem Wasser, Dampf und Mischungen davon, um ein nasses, frei fließendes Gemisch zu bilden; und
Extrudieren des nassen, frei fließenden Gemischs bei einer Temperatur zwischen 149 und 177°C (300 und 350°C), um das expandierte Getreideprodukt zu bilden.

5. Verfahren nach Anspruch 4, wobei der Fasergehalt ausgewählt wird aus der Gruppe bestehend aus Maisfaser, Haferfaser, Weizenkleie, Haferkleie, Maiskleie, Maismehl, Hafermehl und Mischungen davon,
wobei der Fasergehalt vorzugsweise ausgewählt wird aus der Gruppe bestehend aus Hafermehl, Haferfaser, Maisfaser und Mischungen davon.

6. Verfahren nach Anspruch 4, wobei die Wachsstärke ausgewählt wird aus der Gruppe bestehend aus Wachsmaisstärke, Wachsreisstärke, Wachsgerstenstärke und Mischungen davon;
wobei die Wachsstärke vorzugsweise Wachsmaisstärke ist.

7. Verfahren nach Anspruch 4, wobei:
die Wachsstärke in einer Menge von 7 bis 10 Gew.-% bezogen auf die Vollgetreidezusammensetzung vorliegt und der Fasergehalt in einer Menge von 6 bis 10 Gew.-% bezogen auf die Vollgetreidezusammensetzung vorliegt.

8. Verfahren nach Anspruch 7, wobei der Fasergehalt ausgewählt wird aus der Gruppe bestehend aus Maisfaser, Haferfaser, Weizenkleie, Haferkleie, Maiskleie, Maismehl, Hafermehl und Mischungen davon.

9. Verfahren nach Anspruch 7, wobei die Wachsstärke ausgewählt wird aus der Gruppe bestehend aus Wachsmaisstärke, Wachsreisstärke, Wachsgerstenstärke und Mischungen davon;
wobei die Wachsstärke vorzugsweise Maiswachsstärke ist.

10. Expandiertes faserreiches Getreideprodukt, das eine Vollgetreidezusammensetzung nach Anspruch 1 umfasst,
wobei die Vollgetreidezusammensetzung Extrusionsbedingungen ausgesetzt wird, die ausreichen, um das expandierte Produkt zu bilden.

11. Zusammensetzung nach Anspruch 1 oder Produkt nach Anspruch 10, wobei das Wasser in einer Konzentration von 16 bis 22 Gew.-% bezogen auf die kombinierten trockenen und nassen Inhaltsstoffe vorliegt.

## Revendications

1. Composition totale de céréales pour traitement par extrusion en vue de former un produit céréalier expansé riche en fibres, ladite composition comprenant :
de l'amidon cireux dans une quantité de 7 à 10 % en poids de la composition totale et un mélange de céréales comprenant une teneur en fibres dans une quantité de 6 à 10 % en poids de la composition totale,
des céréales à grains entiers présents dans une quantité de 60 % à 90 % en poids de la composition totale de céréales, et
une quantité d'eau suffisante pour former le produit expansé,
dans lequel la composition totale de céréales est mélangée à de l'eau sous la forme sélectionnée dans le groupe constitué d'eau liquide, de vapeur et de mélanges de ceux-ci, pour former un mélange humide, de grande fluidité, qui devient une pâte de céréale cuite expansible par extrusion,
et dans lequel la quantité d'eau est de 16 % à 22 % en poids du mélange humide, de grande fluidité.

2. Composition selon la revendication 1, dans lequel la teneur en fibres est sélectionnée dans le groupe constitué de fibres de maïs, de fibres d'avoine, de son de blé, de son d'avoine, de son de maïs, de farine de maïs, de farine d'avoine, de farine d'avoine de grain entier et de mélanges de ceux-ci,
de préférence dans lequel la teneur en fibres est sélectionnée dans le groupe constitué de farine d'avoine de grain entier, de fibres d'avoine, de fibres de maïs, et de mélanges de ceux-ci.

3. Composition selon la revendication 1, dans lequel l'amidon cireux est sélectionné dans le groupe constitué d'amidon de maïs cireux, d'amidon de riz cireux, d'amidon d'orge cireux, et de mélanges de ceux-ci ;
de préférence dans lequel l'amidon cireux est de l'amidon de maïs cireux.

4. Procédé pour produire un produit céréalier expansé riche en fibres, consistant à :
combiner un amidon cireux dans une quantité de 5 à 15 % en poids de la composition totale de céréales et un mélange de céréales comportant une teneur en fibres, dans une quantité de 1 à 15 % en poids des céréales totales et des céréales à grains entiers présentes dans une quantité de 60 % à 90 % en poids de la composition totale de céréales, pour former une composition totale de céréales ;
mélanger la composition totale de céréales avec de l'eau sous la forme sélectionnée dans le groupe constitué d'eau liquide, de vapeur et de mélanges de ceux-ci, pour former un mélange humide, de grande fluidité ; et
extruder le mélange humide, de grande fluidité, à une température comprise entre 149 et 177 °C (300 et 350 °F) pour former un produit céréalier expansé.

5. Procédé selon la revendication 4, dans lequel la teneur en fibres est sélectionnée dans le groupe constitué de fibres de maïs, de fibres d'avoine, de son de blé, de son d'avoine, de son de maïs, de farine de maïs, de farine d'avoine, et de mélanges de ceux-ci,
de préférence dans lequel la teneur en fibres est sélectionnée dans le groupe constitué de farine d'avoine, de fibres d'avoine, de fibres de maïs, et de mélanges de ceux-ci.

6. Procédé selon la revendication 4, dans lequel l'amidon cireux est sélectionné dans le groupe constitué d'amidon de maïs cireux, d'amidon de riz cireux, d'amidon d'orge cireux, et de mélanges de ceux-ci ;
de préférence dans lequel l'amidon cireux est de l'amidon de maïs cireux.

7. Procédé selon la revendication 4, dans lequel :
l'amidon cireux est présent dans une quantité de 7 à 10 % en poids de la composition totale de céréales, et la teneur en fibres est présente dans une quantité de 6 à 10 % en poids de la composition totale de céréales.

8. Procédé selon la revendication 7, dans lequel la teneur en fibres est sélectionnée dans le groupe constitué de fibres de maïs, de fibres d'avoine, de son de blé, de son d'avoine, de son de maïs, de farine de maïs, de farine d'avoine, et de mélanges de ceux-ci.

9. Procédé selon la revendication 7, dans lequel l'amidon cireux est sélectionné dans le groupe constitué d'amidon de maïs cireux, d'amidon de riz cireux, d'amidon d'orge cireux, et de mélanges de ceux-ci ; de préférence dans lequel l'amidon cireux est de l'amidon de maïs cireux.

10. Produit céréalier expansé riche en fibres comprenant une composition totale de céréales selon la revendication 1,
dans lequel la composition totale de céréales est soumise à des conditions d'extrusion suffisant à former le produit expansé.

11. Composition selon la revendication 1, ou produit selon la revendication 10, dans lequel l'eau se trouve à une concentration de 16 à 22 % en poids des ingrédients secs et humides combinés.
